**Europäisches Patentamt**

(19) **European Patent Office**

**Office européen des brevets**

(11) Publication number: **0 251 099 B1**

## (12) EUROPEAN PATENT SPECIFICATION

(45) Date of publication of patent specification:
**06.02.91 Bulletin 91/06**

(51) Int. Cl.$^5$: **B65G 47/24**, B65G 15/10, C14B 17/06

(21) Application number: **87108900.9**

(22) Date of filing: **22.06.87**

(54) Spreading conveyer, particularly for machines, for measuring irregular sheetlike materials, such as animal hides, whereby hide stretching before, during and after mensuration is provided.

(30) Priority: **23.06.86 IT 8362786**

(43) Date of publication of application:
**07.01.88 Bulletin 88/01**

(45) Publication of the grant of the patent:
**06.02.91 Bulletin 91/06**

(84) Designated Contracting States:
**DE ES FR GB IT**

(56) References cited:
**DE-A- 1 660 096
US-A- 3 473 244**

(73) Proprietor: **FORNI VARESE S.N.C. DEI FRATELLI DEON E LEONARDI
Via E. Fermi 25
I-21027 Ispra Varese (IT)**

(72) Inventor: **Deon, Gottardo
Via E. Fermi 25
I-21027 Ispra (Varese) (IT)**
Inventor: **DEON, Luigi
Via E. Fermi 25
I-21027 ISPRA (Varese) (IT)**

(74) Representative: **Sassi, Romano
UFFICIO BREVETTI VARESINO Viale Belforte 89
I-21100 Varese (IT)**

## Description

The invention relates to a device for conveying sheetlike materials, particularly for use in machines for measuring the surface area of sheetlike materials having an irregular perimeter, such as animal hides, whereby the sheetlike material is stretched before, during and after mensuration, the device comprising at least a bottom conveyor provided with an endless conveying member having an upper run to support the sheetlike material, a similar upper conveyor being provided above the bottom conveyor, said upper conveyor comprising an endless conveying member whose lower run engages the upper surface of the sheetlike material, said upper conveyor being driven for movement of its lower run in the same direction as the upper run of the bottom conveyor, whereby the sheetlike material is moved and vertically pressed against its main surfaces.

According to known techniques, US-A- Patent 3473244 shows a conveyor for animal hides comprising a bottom conveyor and an upper conveyor, the upper conveyor having an endless conveying member engaging the upper surface of the hide, whereby the hide, being moved, is vertically forced against its main surfaces thus giving an even attitude. Moreover an endless conveying member comprising endless cords or strips is known per se (see for instance DE-A-1660096).

In the known conveyers, difficulties were encountered to combine these two devices and to provide favorable conditions for embodying them into measuring machines of irregular sheetlike materials, such as cattle hides, to distend the hides, before, during and after mensuration and along the complete procedure, comprising marking of hides, including the indication of surface area value of each of them.

Further difficulties resulted on delivery of the hide, after the mensuration and/or marking device ; quite often become full of wrinkles and the like, thus undergoing a heavy quality degradation.

The invention as claimed is intended to remedy these drawbacks. The inventor has conceived a conveyer, particularly for machines for measuring irregular sheetlike materials, such as animal hides and the like, wherein continuous stretching of hides, is performed in a fashion strictly horizontal or parallel to the surface being measured. The device comprises at least a bottom conveyor provided with an endless conveying member having an upper run to support the sheetlike material, a similar upper conveyor being provided above the bottom conveyor, said upper conveyor comprising an endless conveying member whose lower run engages the upper surface of the sheetlike material, said upper conveyor being driven for movement of its lower run in the same direction as the upper run of the bottom conveyor, whereby the sheetlike material is moved and vertically pressed against its main surfaces ; the endless conveying member of each conveyor comprises a plurality of endless cords or strips divided into ranks, which ranks diverge with respect to the conveying direction, whereby the sheetlike material is stretched, being spread outwardly by forces working in a direction parallel with the main surfaces of the sheetlike material

A machine or device embodying the present invention, provides an arrangement wherein the endless strips or belts of the bottom conveyer, are comprised in at least two ranks, which, in at least one section thereof, particularly including the mensuration device, are arranged in a "V" attitude. In other words, about one half of members, comprising a first rank, diverge from the remaining members, comprising a second rank, in a fashion to leave a triangular space therebetween. To obtain this by minimizing wearing each conveyer of endless strips or belts runs over at least three rolls, at least two of which provide therebetween a concave angle, whose vertex comprises a twofold support bearing the adjacent end of both rolls. Correspondingly, the endless strips or belts of the upper conveyer are comprised in at least two ranks, which, in at least one section thereof, particularly including the mensuration device are arranged in a "V" attitude. In other words, about one half of members, comprising a first rank, diverge from the remaining members, comprising a second rank, in a fashion to leave a triangular space therebetween. To obtain this by minimizing wearing each conveyer of endless strips or belts runs over at least three rolls, at least two of which provide therebetween a concave angle whose vertex comprises a twofold support bearing the adjacent end of both rolls.

The upper and bottom conveyers cooperate each other in two kinematic ways : 1) the transmission of movement ; 2) comprising together a parallelogram to control the distance between the common plane of lower conveyer upper branches and upper conveyer lower branches of endless strips or belts. These two functions are provided by a single device.

One way of carrying out the invention is described, in detail, below, with reference to drawings which illustrate only one specific embodiment, in which :

Figure 1 is a side view of the upper section of a measuring machine, embodying the conveyer, according to the present invention. In this figure breaking have been made to show otherwise hidden important particulars. The unit is shown in an attitude wherein the upper conveyer is in its lifted position, not engaging the hide being measured, not shown.

Figure 2 is a plane view, of the machine shown at figure 1 but with the upper conveyer lowered.

Figure 3 is a detailed plane view, in an enlarged scale, showing a detail of Figure 2 comprising the crossing lengths of endless strips or belts and respective fitting of optical pick-ups.

Figure 4 is a side view of Figure 3.

Figure 5 is a detailed side view, of the strip or belt transmission driver, interconnecting the lower and upper ranks of strips or belts, as well as one parallelogram member and a jockey pulley provided for sinking, the bottom branches of the upper endless strips or belts.

Figure 6 is substantially a side view of device of Figure 5.

Figure 7 is a detailed side view, showing one member of the suspension parallelogram of the upper conveyer section, as well as a device for automatically adjusting the upper conveyer level or in other words, the distance between the common plane of lower conveyer upper branches and upper conveyer lower branches of endless strips or belts.

Figure 8 is substantially a side view of device shown at Figure 7.

Figure 9 is a partially cross-sectioned detailed side view, in an enlarged scale, showing one end of the upper conveyer, wherein stretching of upper endless strips or belts may be controlled.

Figure 10 is a detailed cross-section, showing a twofold support bearing the adjacent ends of two contiguous conveyer rolls.

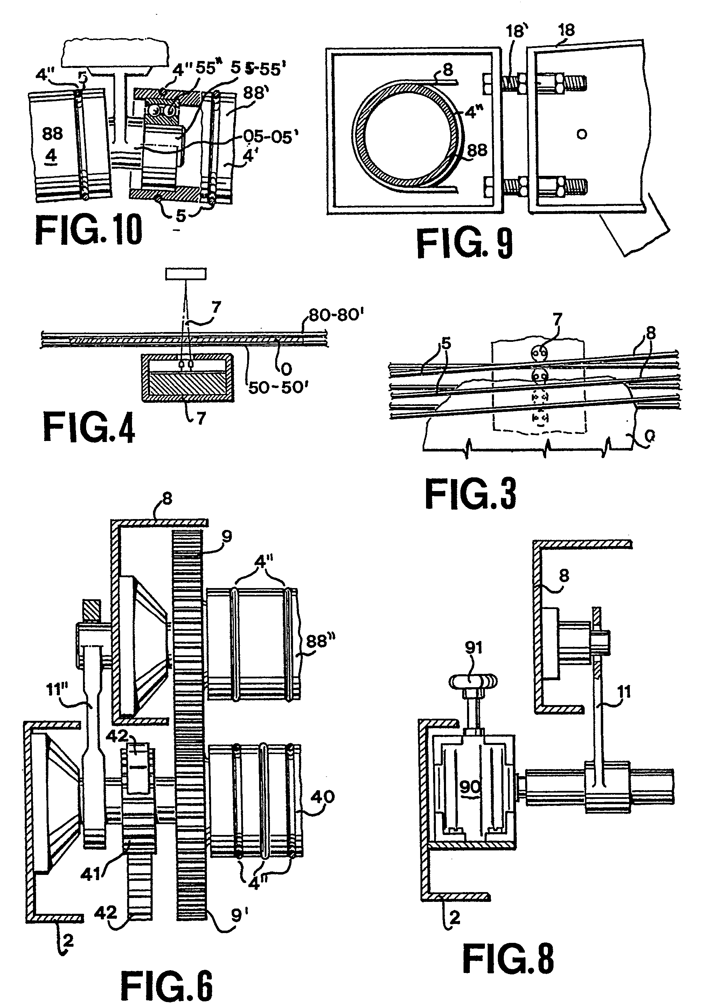

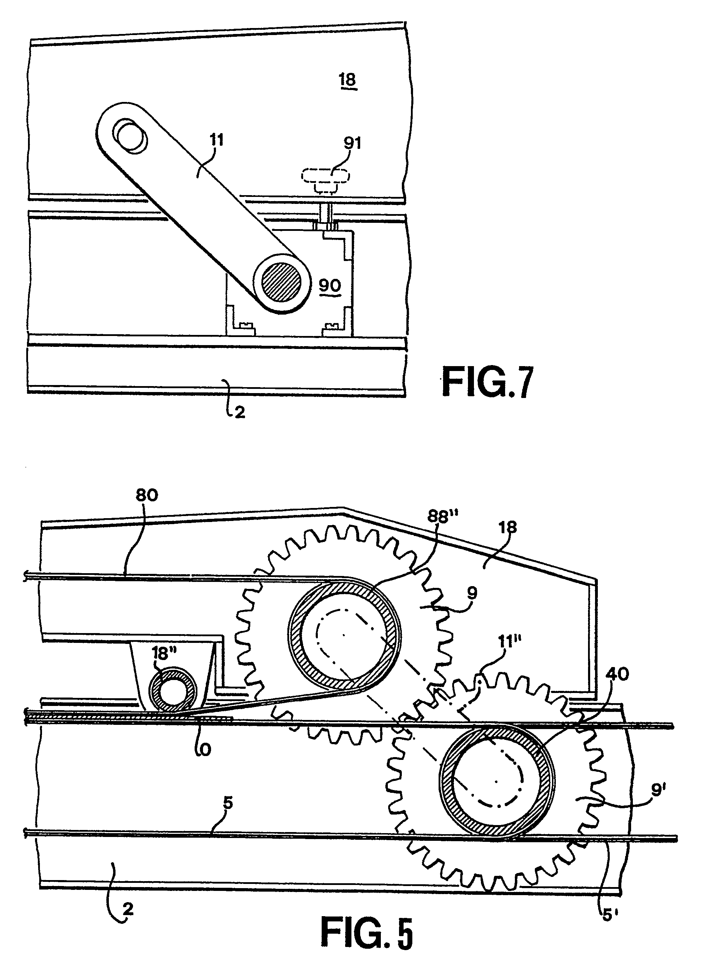

Referring now to the figures of the drawings, a measuring machine comprises, conventionally, a partially shown body 1, a frame 2, for a conveyer 3, with at least one conveyer e.g. two, 3', 3", each of them comprising at least two rolls 4, 4', 40 and a number of endless members 5, 5', in the form of strips, cords, ropes or belts running over rolls 4, 4', 40, i.e. having grooved rims 4". Only one axle is driven, e.g., the axis of roll 40, having a toothed pulley 41 keyed thereto (figure 6) which is engaged by a toothed belt 42, (figure 6) which, in turn, is driven by a motorgear, not shown, fastened to a section of body 1, not shown in the drawings. Power transmission to at least another roll 4, 4', is not necessary as naturally provided by endless strips or belts 5, 5' or mutually by at least a conveyer 3', 3" of cords or ropes 5, 5". Moreover there is a marking device symbolized by box 06.

In such conventional machine, endless strips or belts 5 run, longitudinally, parallel, comprising a movable conveyer and adherence and flatness of hides 0 may be promoted by a device (not shown) providing air depression. Of course, a measuring machine, is provided with a pick-up device 7, for mensuration scanning and other electronic devices duly connected, which supply the mensuration obtained at least to the marking device 06.

According to the present invention, conveyer 3" is substantially provided with three branches running over three rolls 40, 44 and 45. It will be appreciated that over roll 40 are run both the cords or ropes of conveyers 3 and 3" and that rolls, 40, 44 e 45 are arranged with their axes parallel one another in a triangular attitude to provide room inside the endless strips or belts 5' of conveyer 3", to receive therein the marking device 06.

According to an important feature of the present invention, even over the bottom conveyers 3', 3", a conveyer 8, similar therewith, is provided. Such upper conveyer 8 is supported by a frame 18, and includes the substantially horizontal stretcher 18' and the substantially vertical stretcher 18" and is comprised with endless cords or strips 80, providing two diverging ranks 80, 80', engaging the upper surface of the hide 0 being measured and stretched by rolls 88, 88', 88". Thus the hide 0, being moved, is vertically forced against its main surfaces, thus giving to it an even attitude. Moreover, according to the present invention, the cord members 5 and/or 80 of conveyers 3' and/or 3" and/or 8 or grooved rims 4" of rolls, are ideally arranged in diverging unfastened bundles, whereby the hide 0 being supplied and measured, is subjected not only to forces provided perpendicularly to its main surfaces but chiefly to a stretching, spreading it outwardly to the fullest extent, by forces suitably working, in a strictly parallel direction to the main surfaces of hide 0. This stretching, provided at least by bottom branches of upper endless ranks of cords 80, arranged in diverging directions. Such effect is obtained by providing a narrower pitch between grooved rims 4" on one or more downstream rolls 4, 4'; 88, 88', particularly at central gap between ranks or bundles 50, 50'; 80, 80'. In this gap is fitted support 05, to be described in the following.

According to a preferred embodiment of present invention, at least one (88") of upper rolls or conveyers (80) is driven by a bottom roll 40 or conveyer 3', 3" by two gears 9, 9' and the attitude of upper conveyer 8 is adjustable by an arrangement in the form of a parallelogram, driven by a motorgear 90, which controls the distance between upper conveyer 8 and bottom conveyers 3', 3" (figure 8). In fact, any swinging of a pair of linking arms 11, provided by motorgear 90, controlled by knob 91, involves a corresponding swinging of linking arm pairs 11', 11" suspending the upper conveyer 8. It will be appreciated that, in the critical point, wherein both upper and lower endless strips or belts, 50, 50'; 80, 80', respectively go across device 7, scanning the mensuration of the hide 0 being measured, the endless strips or belts 50, 50', 80, 80' cross one another, substantially in a manner to leave enough room to device pick-ups 7 to operate and eliminating disturbing shadows (figure 3).

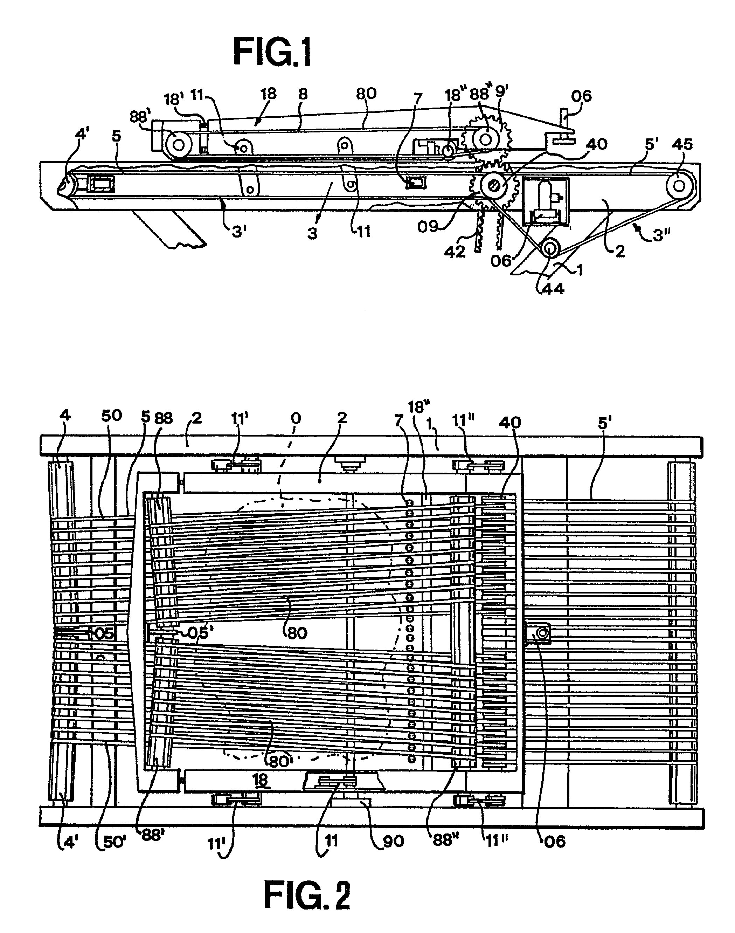

According to a preferred embodiment of present invention, for spreading apart the ranks of cords or ropes 5, 5'; 8, 8', a stretching by three lower and upper rolls, 4, 4', 40; 88, 88', 88" respectively, is used, wherein the rolls 4, 4' and 88, 88' are supported at their adjacent ends by one support 05, 05' (figures 2 and 10) provided by inserts 55, 55' each receiving

a self-aligning bearing 55″, duly supporting the adjacent roll.

From the foregoing the operation of the machine should be evident, however in the following a description will be given. At start (figure 1) the parallelogram suspension of upper conveyer 8, including the pairs of arms 11, 11′, 11″ is lifted better swung up in clockwise direction by about 90 degrees. In these conditions, the bottom branches 80, 80′of upper cords or ropes 8, are lifted, beyond the upper branches 50, 50′of the lower cords or ropes 5. In fact, the bottom end of arms 11 is keyed on the shaft of motorgear 90, which may be controlled, by knob 91. Of course this regulation does not affect the transmission to the upper conveyer, as the gears 9 and 9′ are permanently meshing. More particularly, in generally intermediate positions an average regulation is made keeping into account the thickness of hides 0. Powering the driving motor, not shown, of the machine, the belt 42, driven thereby, drives in turn, the pulley 41 (figure 6) and the latter drives roll 40, which is provided with two ranks of alternated grooved rims 4″. The grooved rims of one rank are engaged by cords 5 and the alternated grooved rims are engaged by cords or ropes 5′ of conveyer 3″ delivering the measured hides 0. Instead of a single bottom conveyer 5, two bottom conveyers 5, 5′are provided, wherein conveyer 5, covering the upstream length preceding the mensuration station 7, is used for the special purpose to spread the hide being measured to the fullest extent and this may be made easily by a shorter conveyer. Whereas, conveyer 5′, covering the length following the mensuration station 7, is used for the special purpose to remove the measured hides. Carpet 5′ is in the form of a miniconveyer whose endless cord members 3″ run over three rolls 40, 44, 45 with triangular attitude to receive therein the marking device 06.

## Claims

1. Device for conveying sheetlike materials, particularly for use in machines for measuring the surface area of sheetlike materials having an irregular perimeter, such as animal hides, whereby the sheetlike material is stretched before, during and after mensuration, the device comprising at least a bottom conveyor provided with an endless conveying member having an upper run to support the sheetlike material, a similar upper conveyor being provided above the bottom conveyor, said upper conveyor comprising an endless conveying member whose lower run engages the upper surface of the sheetlike material, said upper conveyor being driven for movement of its lower run in the same direction as the upper run of the bottom conveyor, whereby the sheetlike material is moved and vertically pressed against its main surfaces, characterized in that the endless conveying member of each conveyor comprises a plurality of endless cords or strips divided into ranks, which ranks diverge with respect to the conveying direction, whereby the sheetlike material is stretched, being spread outwardly by forces working in a direction parallel with the main surfaces of the sheetlikematerial.

2. Device for conveying sheetlike materials, as claimed in claim 1, characterized in that the diverging arrangement is obtained by providing a wider pitch between grooved rims (4″) in one or more downstream rolls (40, 88″) with respect to the corresponding pitch between grooved rims (4″) on upstream rolls (4, 4′; 88, 88′), particularly in their central section, between ranks (50, 50′; 80, 80′).

3. Device for conveying sheetlike materials, as claimed in claims 1 and 2, wherein at least one of the upper conveyers (8) or conveyer rolls (88″) is driven by a lower roll (40) or conveyer (5) characterized in that such driving is obtained by means of two meshing gears (09, 9′), the attitude of upper conveyer (8) being adjustable by a parallelogram whose swinging arms (11′, 11′, 11″, 11″) are contextually driven by a motorgear (90, 91).

4. Device for conveying sheetlike materials, as claimed in claims from 1 to 3, characterized in that in the critical point, wherein both upper and lower endless strips or belts, (50, 50′; 80, 80′) go across to device (7), scanning the mensuration of the hide (0) being measured, the endless strips or belts (50, 50′, 80, 80′) cross one another, substantially in a manner to leave enough room to device pick-ups (7) to operate and to eliminate disturbing shadows.

5. Device for conveying sheetlike materials, as claimed in claim 1. characterized in that the lower conveyer comprises two conveyer sections (5, 5′) wherein the first section (5) including the diverging ranks (50, 50′) is located substantially upstream of the mensuration station (7) while consecutively thereto is joined the second conveyer section (5′) provided with parallel endless strips or belts (5′), the two conveyer sections (5, 5′) having a common intermediate roll (40) which engages the strips or belts 50, 50′; 5′) of both conveyer sections (5, 5′) running thereover in alternated grooves (4″) and in opposed directions.

6. Device for conveying sheetlike materials, as claimed in claim 1, characterized in that the spreading apart of the ranks of endless strips or belts is provided by running them over at least three rolls (4, 4′, 40; 88, 88′, 88″), two of which (4, 4′; 88, 88′) having substantially half length and arranged with their axes spread apart to provide a concave or lower than 180 degrees angle therebetween whose vertex comprises a twofold support (05, 05′) bearing the adjacent ends of both rolls (4, 4′; 88, 88′)

Ansprüche

1. Vorrichtung zur Transportierung von blattförmigen Materialien, die insbesondere für Maschinen zum Messen der Flächenmessungen von unregelmässigem blattförmigem Werkstoff, wie tierischen Häuten, verwendbar ist, bei welcher die Haut vor, während und nach dem Messvorgang ausgedehnt wird, wobei die Vorrichtung aus mindestens einem mit einem endlosen, ein Oberförderteilband zum Tragen von blattförmigen Materialien aufweisenden Förderteil, versehenen Unterfördererteil besteht, wobei ein dem Unterfördererteil ähnlicher Oberfördererteil über dem Unterfördererteil vorgesehen ist, der gennante Oberfördererteil einen endlosen Förderteil einschliesst dessen Unterförderteilband der Oberfläche des blattförmigen Werkstoffes entgegenkommt, wobei der genannte Oberfördererteil so angetrieben wird, dass die Bewegung seines Unterförderteilbandes in der gleichen Richtung wie das Oberförderteilband des Unterfördererteiles erfolgt, wobei das blattförmige Material bewegt und vertikal gegen seine grösseren Flächen gedrückt wird, dadurch gekennzeichnet daß der endlose Förderteil von jedem Fördererteil aus einer Mehrzahl von endlosen, in Rängen untergeteilten, von der Förderersrichtung auseinandergehenden Schnuren oder Bändchen besteht, wobei sich das blattförmige Material durch parallel zur Oberfläche des blattförmigen Materials wirkende Kräfte durch Ausbreitung nach aussen ausgedehnt wird.

2. Vorrichtung zur Transportierung von blattförmigen Materialien, nach Anspruch 1, dadurch gekennzeichnet, dass die Divergenz mittels eines Abstandes zwischen gerillten Riemen (4″) in einer oder mehreren strömab Walzen (40, 88″) der grösser als der Abstand zwischen gerillten Riemen (4″) in den strömauf Walzen (4, 4′ ; 88, 88′) ist, erzielt wird, insbesondere in ihrem mittleren Teil zwischen den Rängen (50, 50′ ; 80, 80′).

3. Vorrichtung zur Transportierung von blattförmigen Materialien, nach Ansprüche 1 und 2, wobei mindestens einer der Oberfördererteile (8) oder Fördererwalzen (88″) durch eine Unterwalze (40) oder einen Unterfördererteil (5)angetrieben wird, dadurch gekennzeichnet, dass solcher Antrieb durch zwei übereinstimmenden Zahnräder (09, 9′), ermöglichert wird, wobei die Anordnung des Oberfördererteiles (8), durch ein drehende Arme (11′, 11′, 11″, 11″) aufweisendes Parallelogramm einstellbar ist, welche von einem Getriebemotor (90, 91) zusammen angetrieben werden.

4. Vorrichtung zur Transportierung von blattförmigen Materialien, nach einem der Ansprüche 1 bis 3, dadurch gekennzeichnet, daß an dem kritischen Punkt woran die beiden endlosen Ober- und Unterbändchen oder Schnuren (50, 50′ ; 80, 80′), die Messvorrichtung (7) durchkreuzen, die die Abmessungen von der zu ermessenden Haut (0) bestimmt, die endlosen Schnuren oder Riemen (60, 60′, 80, 80′) sich miteinander so gekreuzt werden, dass sie der Pickup Vorrichtung (7) genügenden Raum freilassen, um funktionieren zu können und keine störende Schatten auftreten.

5. Vorrichtung zur Transportierung von blattförmigen Materialien, nach dem Anspruch 1, dadurch gekennzeichnet, daß der Unterfördererteil aus zwei Halbförderteile (5, 5′) besteht, wobei der erste die auseinandergehenden Ränge (50, 50′) einschliessende Halbförderteil (5) wesentlich aufströmig von der Messstation (7) angeordnet ist, während der zweite mit endlosen parallelen Schnuren oder Riemen versehene Halbförderteil (5′), mit dem ersten (5) nachfolgend verbunden ist, wobei beide Halbförderteile (5, 5′) eine gemeinsame Zwischenwalze (40), aufweisen, die die in abwechselnden Rillen (4″) und in entgegengesetzten Richtungen darüberlaufenden Schnuren oder Riemen (50, 50′, 5′) beider Halbförderteile (5, 5′) antreibt.

6. Vorrichtung zur Transportierung von blattförmigen Materialien, nach Anspruch 1, dadurch gekennzeichnet, dass das Auseinandergehen von den Rängen der endlosen Schnuren oder Riemen durch das Überlaufen derselben auf mindestens drei Walzen (4, 4′, 40, 88′, 88″) erzielt wird, zwei von denen (4, 4′ ; 88, 88′) eine halbe Länge aufweisen und so angebracht sind, dass ihre Achsen nach aussen voneinander abgetrennt sind, um einen konkaven oder kleineren als 180° Winkeln auszubilden, wobei an dessen Ecke eine zwei Lager aufweisende Halterung (05, 05′) vorgesehen ist, welche die Enden von beiden Walzen (4, 4′ ; 88, 88′) unterstützt.

Revendications

1. Dispositif pour convoyer matières en forme de feuilles, particulièrement pour l'usage en machines pour mesurer la surface de matières en forme de feuilles ayant un perimètre irrégulier, comme des peaux d'animales, de telle sorte que les matières en forme de feuilles sont étendues avant, pendant et après la mesure, le dispositif comprennant au moins un convoyeur inférieur pourvu d'un élément convoyer continu ayant une bande pour supporter les matières en forme de feuilles, un convoyeur supérieur similaire étant pourvu au dessus du convoyeur inférieur, le susdit convoyeur supérieur comprennant un élément convoyer continu dont la bande inférieure engage la surface supérieure des matières en forme de feuilles, le susdit convoyeur supérieur étant commandé par le mouvement de sa bande inférieure dans la même direction de la bande supérieure du convoyeur inférieur, de telle sorte que les matières en forme de feuilles sont déplacées et pressées contre ses surfaces plus étendues, caractérisé en ce que l'élément convoyer de chaque convoyeur comprend une plura-

5

lité de cords ou bandes divisées en ordres, les quels divergent avec respect à la direction du convoyer, de telle sorte que la matière en forme de feuilles est étendue en augmentand sa surface extérieurement par des forces qui travaillent dans une direction parallèle à la surface plus étendue des matières en forme de feuilles

2. Dispositif pour convoyer matières en forme de feuilles, selon la revendication 1, caractérisé en ce que le rangement divergent est obtenu en pourvoiant un pas plus vaste entre les bords rainés (4″) sur un ou plusieur de rouleaux (40, 88″) en aval, avec respect au pas correspondant entre les bords rainés (4″) des rouleaux (4, 4′ ; 88, 88′), en amont particulièrement dans sa section centrale, entre les ordres (50, 50′ ; 80, 80′).

3. Dispositif pour convoyer matières en forme de feuilles, selon les revendications 1 et 2, où au moins un des conveyers (8) ou rouleaux (88″) conveyers supérieurs est commandé par un rouleau (40) inférieur au conveyer (5) caractérisé en ce que telle commande est obtenue par deux engranages (09, 9′), le rangement du conveyer supérieur (8) etant réglable par un parallelogram dont les bras oscillants (11′, 11′, 11″, 11″) sont commandés ensemble par un riducteur à moteur (90, 91).

4. Dispositif pour convoyer matières en forme de feuilles, selon la revendication 1 à 3, caractérisé en ce que dans le point critique, où tous les deux rayures ou courroies sans fin, (50, 50′ ; 80, 80′) supérieures et inférieures vont travers du dispositif (7), exploitant le mesurage de la peau (0) étant mesurée, les rayures ou courroies sans fin (50, 50′, 80, 80′) croisent l'une avec l'autre, essentiellement en façon de laisser assez de place opérative au dispositif (7) de reprise et pour éliminer les ombres dérangeantes

5. Dispositif pour convoyer matières en forme de feuilles, selon la revendication 1, caractérisé en ce que le conveyer inférieur comprend deux sections du conveyer (5, 5′) où la première section (5) comprendent les ordres divergents (50, 50′) est placée essentiellement en amont de la station (7) de mesurage, mais en conséquence à la même est joint la deuxième section du conveyer (5′) pourvu de rayures paralleles ou courroies sans fin (5′), les deux sections du conveyer (5, 5′) ayant un common rouleau (40) intermédiaire qui engage les rayures ou courroies (50, 50′ ; 5′) des deux sections (5, 5′) du conveyer, qui s'enroulent sur le même en rainures alternées (4″) et en directions opposées.

6. Dispositif pour convoyer matières en forme de feuilles, selon la revendication 1, caractérisé en ce que l'écartement des ordres des rayures ou courroies sans fin est pourvu en les disposant sur au moins trois rouleaux (4, 4′, 40 ; 88, 88′, 88″), deux des quels (4, 4′ ; 88, 88′) ont essentiellement mi-longeur et sont disposés avec leurs axes écartés pour préparer entre eux un angle concave ou inférieur de 180°, dont le vertex comprend un double support (05, 05′) qui soutient les extremités des deux rouleaux (4, 4′ ; 88, 88′).

# FIG.1

# FIG.2

**FIG.10**

**FIG. 9**

**FIG.4**

**FIG.3**

**FIG.6**

**FIG.8**

**FIG.7**

**FIG.5**